Europäisches Patentamt

(19) European Patent Office

Office européen des brevets

(11) Numéro de publication : **0 291 393 B1**

## (12) FASCICULE DE BREVET EUROPEEN

(45) Date de publication du fascicule du brevet :
28.08.91 Bulletin 91/35

(51) Int. Cl.⁵ : **G01L 9/12**

(21) Numéro de dépôt : **88401092.7**

(22) Date de dépôt : **05.05.88**

(54) **Structure de cellule capacitive pour la mesure des pressions différentielles.**

(30) Priorité : **07.05.87 FR 8706751**

(43) Date de publication de la demande :
**17.11.88 Bulletin 88/46**

(45) Mention de la délivrance du brevet :
**28.08.91 Bulletin 91/35**

(84) Etats contractants désignés :
**AT BE CH DE ES FR GB IT LI LU NL SE**

(56) Documents cités :
**GB-A- 2 048 488
US-A- 4 612 812**

(73) Titulaire : **OTIC FISCHER & PORTER S.A.
151 bis, avenue de la Libération
F-63000 Clermont-Ferrand (FR)**

(72) Inventeur : **Maitre, Pierre
2 Allée des Bruyères
F-25000 Besancon (FR)**
Inventeur : **Valentin, Jean-Pascal
rue des Vignes
F-25115 Pouilley-Les-Vignes (FR)**

(74) Mandataire : **Chanet, Jacques
Conseil en Brevets 129 Avenue de Royat B.P. 27
F-63400 Chamalières (FR)**

# Description

La présente invention est du domaine des mesures physiques et elle a plus particulièrement pour objet une cellule, ou capteur, destinée à la mesure de pressions différentielles exercées de part et d'autre d'une membrane séparant deux milieux, et elle a trait plus particulièrement à celles de ces cellules dans lesquelles une électrode de condensateur est associée à la membrane en regard d'une autre électrode solidaire d'une partie fixe, ces cellules étant dites cellules capacitives de mesure de pressions différentielles.

On connaît par un brevet US 2.753.515 (RICKNER) un commutateur basé sur une cellule capacitive de mesure de pressions différentielles ; on connaît aussi par un brevet US 2.999.385 (WOLFE) une cellule du type précité dans laquelle une membrane en acier est disposée dans une cavité formée entre des disques de verre dont une face interne est concave. De très nombreuses formes de réalisation de cellules capacitives ont été développées sur le modèle précité, les unes ne comportant qu'une membrane comprise entre des faces concaves en regard, les autres comportant deux membranes, chacune des membranes étant disposée à l'extrémité d'un corps cylindrique à faces d'extrémité concaves communiquant entre elles. Ce dernier type de cellule capacitive est cité comme art antérieur dans un brevet US 4.169.389 (YASUHARA). On pourra prendre aussi connaissance au titre d'un art antérieur voisin traitant de cellules capacitives pour la mesure de la pression différentielle, des brevets US 2.808.545 (HIRTREITER), US 3.618.390 (FRICK), US 3.691.842 (AKLEY), US 4.072.057 (YASUHARA), US 4.301.492 (PAQUIN), US 4.458.537 (BELL), US 4.531.415 (ORLOWSKI).

Certains des dispositifs cités comportent des cavités dont la forme est adaptée pour recevoir la membrane lorsque celle-ci se déforme. A la connaissance de la Demanderesse, et tel que cela ressort de l'examen approfondi de l'art antérieur, la forme de ces cavités est celle de calottes sphériques ; en outre et toujours suivant l'examen de l'art antérieur les membranes ou diaphragmes utilisées sont en métal, par exemple en acier inoxydable, tandis que le disque concave, encore appelé corps de cellule, peut être en verre.

Un premier inconvénient des cellules à cavité sphérique précitées réside dans le fait que la variation globale de capacité n'est pas une fonction simple de la variation de pression différentielle, à tel point que des circuits électroniques complexes doivent être adjoints à la cellule pour rendre le signal linéaire en fonction de la pression différentielle ; un tel circuit est décrit par exemple dans le brevet US 4.193.063 (HITT).

Un autre inconvénient de ces cellules réside dans le fait que, dans le cas où le fluide dont on mesure la pression est en contact direct avec la membrane, ce fluide ne doit pas être agressif chimiquement vis-à-vis de la membrane, or de très nombreux fluides, en particulier des gaz, dont on veut mesurer la pression sont corrosifs à l'égard de l'acier des membranes, par exemple gaz contenant des acides ou des anhydrides d'acide.

Un autre inconvénient tenant à la forme sphérique des cavités réside dans la fatigue rapide de la membrane au voisinage du bord de la cavité, qui forme une arête d'angle solide plus ou moins obtu.

La présente invention a pour buts :

a) de proposer une structure de cellule capacitive de mesure de pressions différentielles dont les membranes puissent sans dommage être mises en rapport avec un fluide normalement agressif vis-à-vis des membranes en acier,

b) de proposer une cellule capacitive dont la membrane puisse supporter sans fatigue appréciable des variations de pressions élevées et répétées, enfin

c) de proposer une cellule capacitive dont la capacité globale varie sensiblement suivant une fonction simple de la pression différentielle mesurée de façon à éviter l'utilisation de circuits de linéarisation.

La cellule capacitive de l'invention destinée à la mesure différentielle de pressions est du type comprenant au moins une partie de corps de forme générale cylindrique ayant au moins une de ses faces d'extrémité concave, ladite partie de corps au moins pouvant être constituée d'un matériau minéral non métallique tel que le verre, ladite face concave constituant ou supportant la première électrode d'un condensateur, au moins une membrane appliquée de façon étanche contre les bords de ladite face concave, ladite membrane constituant ou supportant la seconde électrode, ladite cellule pouvant comporter deux membranes dans le cas où ledit corps a ses des faces concaves, la cavité de chacune des faces étant obturée par une membrane, les cavités communiquant entre elles par un conduit, le volume des cavités et du conduit étant occupé par un liquide, la cellule comportant dans tous les cas un plan de symétrie compris entre lesdites faces concaves et un axe de symétrie perpendiculaire au dit plan et passant par le centre desdites faces concaves.

Suivant l'invention une cellule capacitive du type précité est caractérisée principalement en ce que chaque surface d'une face concave se raccorde de façon tangentielle au plan contenant le bord de ladite face, une zone d'inflexion de ladite surface étant située vers approximativement le milieu de la distance séparant le centre de la surface de son bord.

Il résulte de cette disposition un allongement très substantiel de la durée de vie de la cellule en raison du ménagement de la membrane ; de ce fait, on va pouvoir utiliser des membranes ou diaphragmes de raideur beaucoup plus élevé comme par exemple des membranes en verre ou en céramique ; il résultera de l'emploi de ces derniers matériaux comme membrane que cette dernière pourra être mise directement en contact avec un milieu normalement corrosif pour les membranes en acier.

Cependant un autre résultat plus surprenant a été constaté : une variation de la capacité en fonction de la pression beaucoup plus proche de celle des cellules à électrode plane indéformable, que ne l'est la variation des cellules à membrane connues de l'art antérieur. Cette constatation a conduit la Demanderesse à rechercher parmi les formes possibles de la cavité, la forme ou famille de formes pour laquelle la variation de capacité reproduirait exactement celle des électrodes planes. Ainsi et suivant une seconde caractéristique de l'invention, il a été trouvé que la forme ou famille de formes recherchée est celle suivant laquelle la distance $\underline{z}$ séparant ladite surface concave en un quelconque de ses points, est approximativement proportionnelle à $(R^2 - r^2)^2$ dans laquelle $\underline{R}$ est le rayon de la face d'extrémité et $\underline{r}$ la distance radiale séparant le point considéré de l'axe de symétrie.

Suivant une autre caractéristique générale de la cellule de l'invention, le matériau constitutif de la membrane est un matériau minéral non métallique tel qu'un verre ou une céramique.

Suivant une autre disposition caractéristique de l'invention, le corps de cellule est divisé en deux blocs, chacun d'eux constitué d'un matériau non métallique, chacun d'eux étant limité par une surface latérale cylindrique, par une dite face concave et par une face circulaire plane, un corps intermédiaire métallique cylindrique à faces d'extrémités planes et parallèles étant disposé entre les deux blocs non métalliques.

Il résulte de cette dernière disposition que le corps intermédiaire peut supporter sans défaillance des contraintes mécaniques très élevées que ne supporterait pas le matériau des blocs et qu'il peut se prêter à des usinages de bridage ou de raccordement qui seraient délicats à réaliser ou peu fiables, dans les matériaux non métalliques.

Avantageusement le corps intermédiaire est percé radialement d'un canal de remplissage débouchant dans ledit conduit de communication tandis qu'un moyen d'obturation du canal est situé dans le canal au voisinage de sa jonction avec le conduit.

Suivant un autre aspect de l'invention, d'une part chacune desdites premières électrodes de condensateur supportée par ladite face concave est constituée par une couche de métal en forme de calotte, ladite couche en forme de calotte étant centrée sur ledit axe de symétrie et ayant un diamètre égal à environ la moitié du diamètre du bord de la face concave, ladite électrode se prolongeant suivant une mince langue radiale jusqu'au bord de ladite face concave, tandis que, d'autre part, chacune desdites secondes électrodes est constituée par une couche de métal s'étendant sur la totalité d'une face de la membrane, à l'exception d'une partie non métallisée jouxtant le bord de la face, cette partie non métallisée étant destinée à être placée en regard de ladite langue ; grâce à cette disposition, la connexion des électrodes avec le circuit électrique est réalisée depuis leur bord.

Avantageusement encore, lesdites couches de métal constituant lesdites première et deuxième électrodes de condensateur sont déposées par métallisation sous vide.

Avantageusement enfin un manchon est disposé autour de l'ensemble formé par les membranes, les deux blocs et le corps intermédiaire, un joint de scellement assurant la liaison entre le manchon et l'ensemble.

La présente invention sera mieux comprise et des explications en seront données à la description qui va être faite de formes particulières de réalisation en relation avec les figures des planches annexées dans lesquelles :

— les fig. 1 et 2 sont des illustrations schématiques de cellules types de l'art antérieur auquel se réfère la présente invention,

— la fig. 3 est une coupe schématique diamétrale d'une demie cellule de l'invention,

— la fig. 4 est une coupe schématique diamétrale d'une cellule de l'invention appliquant les principes illustrés à la figure précédente, et

— les fig. 5 et 6 sont des illustrations des électrodes de condensateur d'une cellule de la fig. 4.

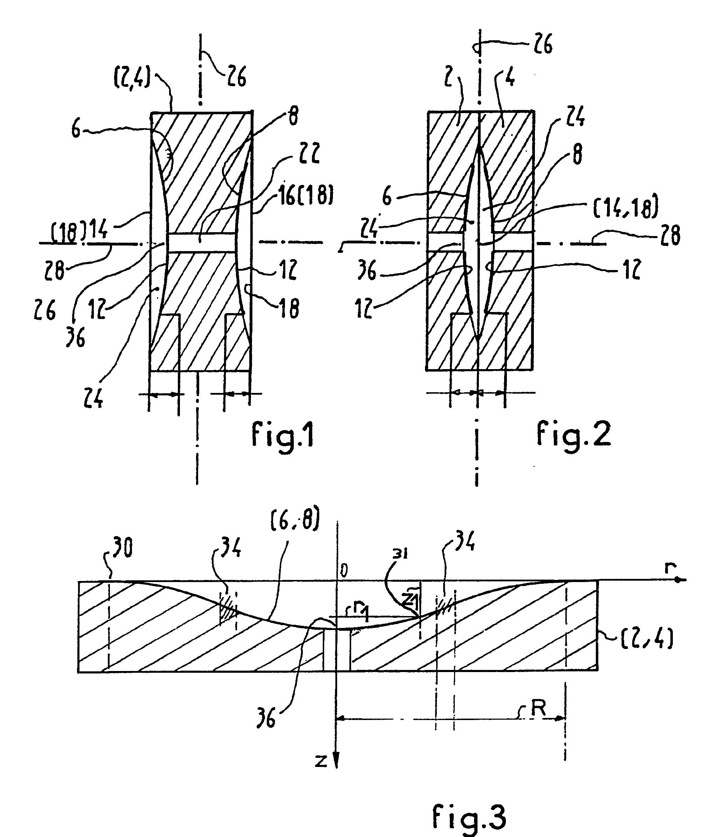

Sur les fig. 1 et 2, une cellule type de l'art antérieur, chacune des deux cellules étant fonctionnellement équivalente à l'autre, comprend au moins une partie de corps de forme générale cylindrique ayant au moins une de ses faces d'extrémité concave, ladite partie de corps au moins pouvant être constituée d'un matériau minéral non métallique tel que le verre, ladite face concave constituant ou supportant la première électrode d'un condensateur, au moins une membrane appliquée de façon étanche contre les bords de ladite face concave, ladite membrane constituant ou supportant la second électrode, ladite cellule pouvant comporter deux membranes dans le cas où ledit corps a ses deux faces concaves, la cavité de chacune des faces étant obturée par une membrane, les cavités communiquant entre elles par un conduit, le volume des cavités et du conduit étant occupé par un liquide, la cellule comportant dans tous les cas un plan de symétrie compris entre lesdites faces concaves et un axe de symétrie perpendiculaire au dit plan et passant par le centre desdites faces concaves. Il est important de noter que les cavités sont substantiellement sphériques et que leur bord forme une arête qu'en analyse algébrique on définira comme une ligne ou lieu de rebroussement. Sans doute l'angle solide formé par le cône de tangence à la partie sphérique et par le plan formé par le bord proprement dit du corps de celle est-il très obtus ; cependant cet angle est la cause d'une fatigue prématurée des membranes même si celles-ci sont minces et souples comme le sont les membranes de l'art antérieur.

Sur la fig. 3 et à l'inverse des cellules des figures précédentes, le rebord 30 de la cavité vient rejoindre de façon tangentielle le plan du bord et il est remarquable de constater qu'approximativement la moitié extérieure de la surface concave 6,8 des figures précédentes présente une concavité tournée vers le corps de cellule tandis que la moitié intérieure de la surface concave 6,8 a une concavité tournée vers l'extérieur du corps de cellule ; ces deux moitiés se rejoignent tangentiellement dans une zone d'inflexion 34 ; ainsi il n'existe pour la surface concave 6,8 aucun lieu de rebroussement tel que défini ci-dessus à propos de l'art antérieur.

Toujours sur la fig. 3, on a représenté un couple d'axes orthogonaux o,r et o,z respectivement contenus dans le plan du bord 30 de la cavité, et passant par le centre 36 de celle-ci ; suivant ces repères un point 31 de la surface 6, 8 a pour coordonnées $z_1$ et $r_1$ et il est de même de tout point $3i$ de la surface qui a pour coordonnées $r_i$ et $z_i$ ; si chaque point $3i$ d'abscisse $r_i$ de la surface a une ordonnée $z_i$ satisfaisant à la relation $z_i = k(R^2 - r_i)^2$, la forme de la surface concave 6,8 est alors celle d'une forme préférée de réalisation de l'invention dans laquelle la variation de capacité en fonction de la pression sera identique à celle de la cellule à électrodes planes. Il doit être compris qu'il ne s'agit pas d'une forme unique de surface concave mais d'une famille dont chaque membre répond à une valeur particulière de K. Ainsi, on pourra avoir, répondant à cette définition, des concavités prononcées aussi bien que des concavités à peine apparentes ; pour fixer les idées et pour des valeurs de R de l'ordre de 15 mm, la profondeur des cavités (distance du point 0 au point 36) pourra s'échelonner entre 30 et 100 μm ; les cellules à concavité les plus faibles seront associées à des membranes ayant les épaisseurs les plus fortes, par exemple de l'ordre de 0,7 à 0,8 mm tandis que les cellules à concavité les plus profondes seront associées aux membranes les plus fines (de l'ordre de 0,1 mm) ; les premières de ces cellules conviendront pour des pressions pouvant atteindre 400 bar tandis que les secondes conviendront pour des pressions pouvant atteindre 100 bar.

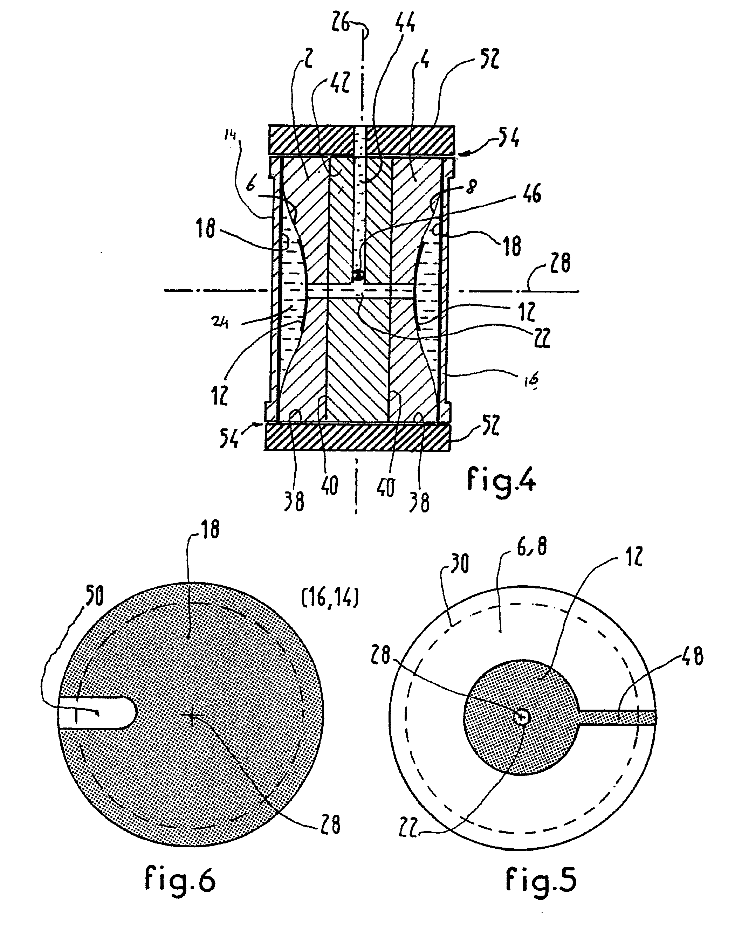

Sur la fig. 4, une cellule de l'invention conforme au modèle du type représenté en fig. 1 se compose d'un corps divisé en deux blocs 2, 4 en matériau non métallique, chacun des blocs étant limité par une surface concave 6, 8 par une surface latérale 38 et, par une surface circulaire plane 40 ; un corps intermédiaire métallique 42 cylindrique à face d'extrémités planes et parallèle sert d'assise aux faces 40. Le corps intermédiaire 42 est percé radialement d'un canal 44 de remplissage débouchant dans un conduit de communication axial 22, un moyen d'obturation 46 (vis à pointeau, vis à bille, etc...) étant situé dans le canal au voisinage de sa jonction avec le conduit.

Les membranes 14, 16 qui, conformément à l'invention sont en verre, en céramique, ou en toute autre matière minérale amorphe ou cristalline, sont du type "en assiette" c'est-à-dire à rebord épais ; elles pourraient être encore de simples disques.

Sur la fig. 5, on a représenté, vue suivant l'axe 28, la face concave d'un corps de cellule ; cette face comporte dans sa partie centrale une zone métallisée 12 en forme de calotte centrée sur l'axe de symétrie 28 et qui se prolonge par une langue assez fine 48 jusqu'au bord du corps de cellule, la calotte métallisée 12 constitue la première armature de condensateur et la langue 48 son moyen de connexion avec le circuit électrique extérieur.

Sur la fig. 6, on a représenté, vue suivant l'axe 28, la face interne d'une membrane 16, 14, cette face comporte sur la quasi totalité de sa surface une couche métallisée 18 qui forme la seconde électrode ; on observe qu'une zone 50 environ aussi longue et légèrement plus large que la langue 48 est réservée à la métallisation de façon à être non métallisée, cette zone 50 est destinée à être placée en regard de la langue 48 ; cette disposition évite le contact entre les deux électrodes. L'intérêt d'avoir métallisé la quasi totalité de la face interne de la membrane réside dans le fait que sa face métallisée constitue en même temps un blindage à l'encontre de champs électriques parasites. La connexion, à la masse par exemple, de cette seconde électrode s'effectue à partir du bord de la face métallisée.

Bien que la disposition ci-dessus décrite pour les électrodes soit une disposition préférée, il doit être compris que l'on pourrait utiliser une disposition inverse, par exemple dans le cas où la cellule devrait comporter une membrane centrale unique ; on pourrait encore envisager les cas de surfaces en regard entièrement métallisées l'une et l'autre, ou encore partiellement métallisées l'une et l'autre.

Enfin on remarquera sur la fig. 4 la présence d'un joint de scellement et d'étanchéité 54 disposé entre le manchon 52 et l'ensemble du corps et des membranes, ce joint étant aussi présent entre les rebords des membranes et du corps de cellule, et entre les corps de cellule et le corps intermédiaire.

Bien que l'on ait décrit et/ou représenté des formes particulières de réalisation d'une cellule capacitive de mesure de pression différentielle conforme à l'invention, il doit être compris que la portée de cette dernière n'est pas limitée à ces formes mais qu'elle s'étend à toute cellule du type visé, comportant les caractéristiques générales énoncées plus haut.

## Revendications

1. Cellule capacitive pour mesure différentielle de pressions, du type comprenant au moins une partie de corps (2, 4) de forme générale cylindrique ayant au moins une (6, 8) de ses faces d'extrémité concave, ladite partie de corps au moins pouvant être constituée d'un matériau minéral non métallique tel que le verre, ladite face concave constituant ou supportant une première électrode (12) d'un condensateur, au moins une membrane (14, 16) appliquée de façon étanche contre les bords de ladite face concave, ladite membrane constituant ou supportant une seconde électrode (18), ladite cellule pouvant comporter deux membranes (14, 16) dans le cas où ledit corps a ses deux faces concaves, la cavité de chacune des faces étant obturée par une membrane, les cavités communiquant entre elles par un conduit (22), le volume (24) des cavités et dudit conduit étant occupé par un liquide, la cellule comportant dans tous les cas un plan de symétrie (26) compris entre lesdites faces et un axe de symétrie (28) perpendiculaire au dit plan et passant par le centre (36) desdites faces, caractérisée : en ce que chaque surface d'une face concave se raccorde de façon tangentielle au plan contenant le bord (30) de ladite face, une zone d'inflexion (34) de ladite surface étant située vers approximativement le milieu de la distance séparant le centre (36) de la surface de son bord (30), le tout de telle sorte qu'il résulte un allongement très substantiel de la durée de vie de la cellule même dans les cas d'utilisation sous des pressions élevées.

2. Cellule selon la revendication 1 caractérisée : en ce que la distance $z$ séparant ladite surface concave en un quelconque de ses points, est approximativement proportionnelle à $(R^2 - r^2)^2$ dans laquelle $R$ est le rayon de la face d'extrémité et $r$ la distance radiale séparant le point considéré de l'axe de symétrie, le tout de telle sorte qu'il résulte que la réponse de la cellule à la pression est identique à celle d'une cellule à électrodes planes.

3. Cellule selon la revendication 1, caractérisée : en ce que le matériau constitutif de la membrane est un matériau minéral non métallique, le tout de telle sorte qu'il résulte que l'on peut à discrétion choisir des matériaux de très grande raideur ou de très grande inertie chimique.

4. Cellule selon la revendication 3, caractérisée : en ce que le matériau constitutif de la membrane est le verre.

5. Cellule selon la revendication 1, caractérisée : en ce que ledit corps est divisé en deux blocs (2, 4), chacun d'eux constitué d'un matériau non métallique, chacun d'eux étant limité par une surface latérale cylindrique (38), par une dite face concave et par une face circulaire plane (40), et en ce qu'un corps intermédiaire (42) métallique cylindrique à faces d'extrémités planes et parallèles est disposé entre les deux blocs (2, 4), le tout de telle sorte qu'il résulte que le corps intermédiaire peut supporter sans défaillance des contraintes mécaniques très élevées que ne supporterait pas le matériau des blocs et qu'il peut se prêter à des usinages de bridage ou de raccordement qui seraient délicats à réaliser ou peu fiables, dans les matériaux non métalliques.

6. Cellule selon la revendication 5, caractérisée : en ce que ledit corps intermédiaire est percé radialement d'un canal (44) de remplissage débouchant dans ledit conduit de communication, et en ce qu'un moyen (46) d'obturation du canal est situé dans le canal au voisinage de sa jonction avec le conduit.

7. Cellule selon la revendication 3, caractérisée : en ce que chacune desdites premières électrodes (12) de condensateur supportée par ladite face concave est constituée par une couche de métal en forme de calotte, ladite couche en forme de calotte étant centrée sur ledit axe de symétrie et ayant un diamètre égal à environ la moitié du diamètre du bord de la face concave, et en ce que ladite couche de métal se prolonge suivant une mince langue radiale (48) jusqu'au bord de ladite face concave.

8. Cellule selon la revendication 7, caractérisée : en ce que chacune desdites secondes électrodes (18) est constituée par une couche de métal s'étendant sur la totalité d'une face de la membrane, à l'exception d'une partie (50) non métallisée jouxtant le bord de la face, cette partie non métallisée étant destinée à être placée en regard de ladite langue (48).

9. Cellule selon la revendication 7, caractérisée : en ce que lesdites couches de métal constituant lesdites premières (12) et deuxièmes (18) électrodes de condensateur sont déposées par métallisation sous vide.

10. Cellule selon la revendication 6, caractérisée: en ce qu'un manchon (52) est disposé autour de l'ensemble formé par les membranes (14, 16), les deux blocs (2, 4) et le corps intermédiaire (42), un joint de scellement (54) assurant la liaison entre le manchon (52) et ledit ensemble.

## Patentansprüche

1. Kondensatorzelle zum Messen von Druckdifferentialen von jener Bauart, bei welchem das Gehäuse (2, 4) von im wesentlichen zylindrischer Gestalt ist, von dessen Stirnflächen wenigstens eine (6, 8) konkav ist, wobei der genannte Teil des Gehäuses aus einem nicht-metallischen, mineralischen Material wie Glas bestehen kann, und die genannte konkave Fläche eine erste Elektrode eines Kondensators bildet oder trägt, mit wenigstens einer Membrane (14, 16), die in dichter Weise an den Rändern der genannten konkaven Fläche anliegt und eine zweite Elektrode (18) bildet oder trägt, wobei die genannte Zelle in jenem Falle zwei Membranen (14, 16) aufweisen kann, in welchem das Gehäuse zwei konkave Flächen hat, die Ausnehmung einer jeden Fläche von einer Membran abgesperrt ist und die Ausnehmungen untereinander in leitender Verbindung stehen über eine Leitung (22), wobei das Volumen (24) der Ausnehmungen und der genannten Leitung von einer Flüssigkeit erfüllt ist, und wobei die Zelle in allen Fällen eine Symmetrieebene (26) aufweist, die sich zwischen den genannten Flächen sowie einer Symmetrieachse (28) befindet, die zu der genannten Ebene senkrecht liegt und durch das Zentrum (36) der genannten Flächen verlauft, dadurch gekennzeichnet, daß jede konkave Fläche nach Art einer Tangente in die den Rand (30) der genannten Fläche enthaltende Ebene übergeht, daß sich eine Wendezone (34) der genannten Fläche angenähert in der Mitte des Abstandes befindet, der das Zentrum (36) der Fläche von ihrem Rand (30) trennt, und zwar derart, daß die Lebensdauer der Zelle ganz erheblich verlängert wird, selbst im Falle der Anwendung hoher Drücke.

2. Zelle nach Anspruch 1, dadurch gekennzeichnet, daß der Abstand z, der die genannte konkave Fläche von einem ihrer Punkte trennt, annähernd $(R^2 - r^2)^2$ beträgt, wobei R gleich dem Radius der Stirnfläche und r gleich dem radialen Abstand ist, der den betrachteten Punkt von der Symmetrieachse trennt, derart, daß das vom Druck erzeugte Ausgangssignal der Zelle identisch mit jenem einer Zelle mit ebenen Elektroden ist.

3. Zelle gemäß Anspruch 1, dadurch gekennzeichnet, daß das Material, aus dem die Membran gebildet ist, ein mineralisches, nicht-metallisches Material ist, derart, daß man nach Belieben ein Material wählen kann, das sehr steif oder chemisch sehr inert ist.

4. Zelle nach Anspruch 3, dadurch gekennzeichnet, daß das Material, aus dem die Membran gebildet ist, Glas ist.

5. Zelle nach Anspruch 1, dadurch gekennzeichnet, daß das genannte Gehäuse in zwei Blöcke (2, 4) unterteilt ist, deren jeder aus nicht-metallischem Material besteht und durch eine zylindrische Mantelfläche (38), eine der genannten konkaven Flächen und eine ebene kreisförmige Fläche (40) begrenzt ist, daß ein metallischer, zylindrischer Zwischenkörper (42) mit ebenen, zueinander parallelen Stirnflächen zwischen die beiden Blöcke (2, 4) eingefügt ist, und daß sich hieraus ergibt, daß der Zwischenkörper unbeschädigt sehr hohen mechanischen Beanspruchungen standhält, denen das Material der Blöcke nicht standhalten würde, und daß er für Befestigungs- oder Verbindungsbearbeitung geeignet ist, die bei nicht-metallischen Materialien schwierig und wenig zuverlässig durchzuführen sind.

6. Zelle nach Anspruch 5, dadurch gekennzeichnet, daß der Zwischenkörper radial von einem Füllkanal (44) durchbohrt ist, der in der Verbindungsleitung mündet, und daß im Kanal im Bereich der Verbindungsstelle mit der Leitung ein Absperrorgan (46) vorgesehen ist.

7. Zelle nach Anspruch 3, dadurch gekennzeichnet, daß jede der ersten Elektroden (12) des Kondensators, die von einer konkaven Fläche getragen sind, aus einer Metallschicht in Kalottenform besteht, und daß die kalottenförmige Schicht zur Symmetrieachse zentriert ist und einen Durchmesser aufweist, der gleich der Hälfte des Durchmessers des Randes der konkaven Fläche hat, und daß sich die Metallschicht entsprechend einer dünnen radialen Zunge (48) bis zum Rande der genannten konkaven Fläche verlängert.

8. Zelle nach Anspruch 7, dadurch gekennzeichnet, daß jede der zweiten Elektroden (18) aus einer Metallschicht besteht, die sich über die Gesamtheit einer Membranfläche erstreckt, ausgenommen einen nicht-metallisierten Teil (50), der sich bis zum Rande der Fläche erstreckt und der dazu bestimmt ist, entsprechend der Zunge (48) angeordnet zu werden.

9. Zelle nach Anspruch 7, dadurch gekennzeichnet, daß die genannten metallischen Schichten, die die ersten (12) und zweiten (18) Elektroden des Kondensators bilden, durch Vakuummetallisierung abgelagert sind.

10. Zelle nach Anspruch 6, dadurch gekennzeichnet, daß eine Manschette (52) um die Baueinheit herumgelegt ist, die aus den Membranen (14, 16), den beiden Blöcken (2, 4) und dem Zwischenkörper (42) gebildet ist, und daß eine Kitt-Dichtung (54) die Verbindung zwischen der Manschette (52) und der Baueinheit sicherstellt.

## Claims

1. A capacitive cell to measure differential pressure of a type including at least a part of a body (2-4) of a generally cylindrical shape, with at least one of its extreme faces (6-8) of a concave shape, this part of the body could be constituted of a non-metallic mineral material such as glass, this concave face constituting or supporting a first condenser electrode (12), at least a diaphragm (14-16) slightly fastened to the edges of this concave face, this diaphragm constituting or supporting a second electrode (18), this total cell possibly comprising two diaphragms (14,16) in the case where both faces of the body are concave, the cavity of each face being sealed by a diaphragm both cavities communicating between another by a conduit (22), the volume (24) of cavities and of the said conduit being filled by a liquid, the cell having in any case a symmetrical plane (26) located between these faces, and a symmetrical axis (28) perpendicular to this plane and going through the center (36) of these faces, characterized in that, each surface of a concave face is tangentially joined to the plane formed by the edge (30) of this face, an inflection area (34) of the surface being located roughly half way between the center (36) of the surface and its edge (30), all that results in a very substantial increase in the cell lifetime even in the cases of use under high pressure.

2. A cell as described in claim 1, characterized in that, the distance $z$ separating this concave surface at any point from the cell, is approximately proportional to $(R^2 - r^2)^2$ in which $R$ is the radius of the concave face edge and $r$ the radial distance separating the point and the axis of symmetry all that results in the response of the cell to the pressure to be identical to the response of a cell with flat electrodes.

3. A Cell as described in claim 1, characterized in that, the material constituting the diaphragm is of a non-metallic mineral material all that results in that materials of great rigidity or of high chemical inertia can be chosen.

4. A cell as described in claim 3, characterized in that, diaphragm material is glass.

5. A cell as described in claim 1, characterized in that, the body of the cell is divided into two parts (2-4), each of them comprised a non-metallic mineral material, each of them being bounded by a peripheral cylindrical surface (38) by a concave face and by a flat circular surface (40) and, in that, an intermediate metallic cylindrical body (42) with parallel and plane extremity faces is located between two parts (24), all that results in that the intermediate body can support without failure very high mechanical stresses beyond those which the material of the non-metallic parts would support. The intermediate body can be machined to receive flanges or process connection devices. This machining would be difficult or very unreliable using non-metallic parts.

6. A cell as described in claim 5, characterized in that, into the said intermediate body, a filling conduit (44) is radially drilled in such a way that it communicates with the axial conduit and, in that the filling conduit is provided with a sealing system (46) located in the filling conduit near its junction with the axial conduit.

7. A cell as described in claim 3, characterized in that, each first condenser electrode (12) supported by the said concave face comprises a coat of metal in the shape of a disk, this coating in the shape of a disk is centered on the said axis of symmetry and having a diameter approximately equal to half the diameter of the edge of the concave face and that the said metal coat or layer extends with a thin radial band (48) to the edge of the concave face.

8. A cell as described in claim 7, characterized in that, each second electrode (18) comprises a metallic coating extending totally over one face of the diaphragm with the exception of an unmetallized part (50), close to the edge of this face, this unmetallized part being designed to be placed in front of the above mentioned band (48).

9. A cell as described in claim 7, characterized in that, the metallic coating forming the first (12) and second (18) condenser electrodes is applied in a vacuum metallization process.

10. A cell as described in claim 6, characterized in that, a sleeve (52), is placed around the assembly formed by the diaphragms (14, 16), the two parts (2, 4) and the intermediate body (42); a sealing ring (54) providing a bond between sleeve (52) and assembly.

fig.1

fig.2

fig.3

fig.4

fig.6

fig.5